(19) Europäisches Patentamt
European Patent Office
Office européen des brevets

(11) EP 4 668 360 A1

(12) EUROPEAN PATENT APPLICATION
published in accordance with Art. 153(4) EPC

(43) Date of publication:
**24.12.2025 Bulletin 2025/52**

(21) Application number: **24868650.3**

(22) Date of filing: **13.09.2024**

(51) International Patent Classification (IPC):
***H01M 4/48*** *(2010.01)* ***H01M 4/38*** *(2006.01)*
***H01M 10/0567*** *(2010.01)* ***H01M 10/0525*** *(2010.01)*
***H01M 4/02*** *(2006.01)*

(52) Cooperative Patent Classification (CPC):
**H01M 4/02; H01M 4/38; H01M 4/48;**
**H01M 10/0525; H01M 10/0567;** Y02E 60/10

(86) International application number:
**PCT/KR2024/014069**

(87) International publication number:
**WO 2025/063673 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.09.2023 KR 20230126666**

(71) Applicant: **LG Energy Solution, Ltd.**
**Seoul 07335 (KR)**

(72) Inventors:
- **BAEK, Ga Young**
**Daejeon 34122 (KR)**
- **LEE, Jung Min**
**Daejeon 34122 (KR)**
- **CHO, Yoon Gyo**
**Daejeon 34122 (KR)**
- **LEE, Chul Haeng**
**Daejeon 34122 (KR)**
- **HEO, Eun Seon**
**Daejeon 34122 (KR)**

(74) Representative: **Hoffmann Eitle**
**Patent- und Rechtsanwälte PartmbB**
**Arabellastraße 30**
**81925 München (DE)**

# (54) LITHIUM SECONDARY BATTERY

(57) The present invention provides a lithium secondary battery including a positive electrode; a negative electrode; a separator disposed between the negative electrode and the positive electrode; and a non-aqueous electrolyte, wherein the negative electrode includes a negative electrode active material, the negative electrode active material includes a silicon-based active material, and the non-aqueous electrolyte includes a lithium salt, fluoroethylene carbonate, 1,2-difluoroethylene carbonate, and a coumarin-based compound of a specific formula.

EP 4 668 360 A1

## Description

TECHNICAL FIELD

Cross-reference to Related Applications

This application claims priority from Korean Patent Application No. 10-2023-0126666, filed on September 21, 2023, the disclosure of which is incorporated by reference herein.

Technical Field

The present invention relates to a lithium secondary battery.

BACKGROUND ART

Recently, demand for a secondary battery having high stability as well as high capacity and high output is increasing as an application area of lithium secondary batteries is rapidly expanding not only to electricity, electronics, communication, and power supply of electronic devices such as computers, but also to power storage supply of automobiles or large-area devices such as power storage devices.

The lithium secondary battery may be largely composed of a positive electrode that is composed of a transition metal oxide containing lithium, a negative electrode capable of storing lithium, an electrolyte that becomes a medium for transferring lithium ions, and a separator. In this case, a negative electrode active material, such as a carbon-based active material and a silicon-based active material, may be included in the negative electrode.

With respect to the lithium secondary battery, a film (solid electrolyte interface (SEI) film) is formed on the positive electrode and/or the negative electrode in an initial formation process, and the film may protect the positive electrode and negative electrode during battery operation and may prevent consumption of the electrolyte due to an electrolyte side reaction. In a case in which a robust electrode film is not formed on the positive electrode and/or the negative electrode in the initial formation process, problems, such as capacity degradation and lifetime reduction, may occur.

Particularly, the silicon-based negative electrode active material among the negative electrode active materials is attracting attention because it exhibits higher capacity and higher energy density than the carbon-based active material, but has a disadvantage of a large degree of volume change due to lithium intercalation and deintercalation. Such volume expansion of the silicon-based active material causes many problems such as a reduction in durability of the SEI film already formed, continuous consumption of the electrolyte due to generation of a new surface of the negative electrode active material, and an increase in thickness of the SEI film, and these cause the problems of capacity degradation and lifetime reduction.

DISCLOSURE OF THE INVENTION

TECHNICAL PROBLEM

An aspect of the present invention provides a lithium secondary battery in which high-temperature cycle life performance and high-temperature storage performance may be improved and an electrolyte side reaction may be reduced by forming a flexible and durable film on a negative electrode including a silicon-based active material.

TECHNICAL SOLUTION

[1] The present invention provides a lithium secondary battery including: a positive electrode; a negative electrode; a separator disposed between the positive electrode and the negative electrode; and a non-aqueous electrolyte, wherein the negative electrode includes a negative electrode active material, the negative electrode active material includes a silicon-based active material, and the non-aqueous electrolyte includes a lithium salt, fluoroethylene carbonate, 1,2-difluoroethylene carbonate, and a compound represented by Formula 1.

[Formula 1]

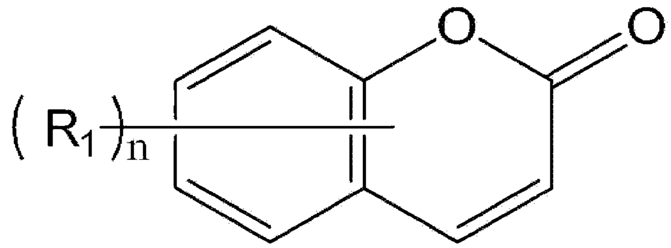

In Formula 1, $R_1$ includes a halogen, a nitrile group, a propargyl group, an ester group, an ether group, a ketone group, a carboxyl group, an unsubstituted or substituted alkyl group, an unsubstituted or substituted alkenyl group, an unsubstituted or substituted alkynyl group, an unsubstituted or substituted alkoxy group, a boron group, a borate group, an isocyanate group, an isothiocyanate group, a silyl group, a siloxane group, a sulfone group, a sulfonate group, a sulfate group, or a combination of two or more thereof, and n is an integer of 0 to 6.

[2] The present invention provides the lithium secondary battery of [1] above, wherein the silicon-based active material includes a silicon-based particle, and the silicon-based particle includes a compound represented by Formula A.

[Formula A] $SiO_x$

In Formula A, $0 \leq x < 2$.

[3] The present invention provides the lithium secondary battery of at least one of [1] and [2] above, wherein the silicon-based particle is formed of silicon (Si).

[4] The present invention provides the lithium secondary battery of at least one of [1] to [3] above, wherein the compound represented by Formula 1 includes at least one selected from the group consisting of a compound represented by Formula 1-A and a compound represented by Formula 1-B.

[Formula 1-A]

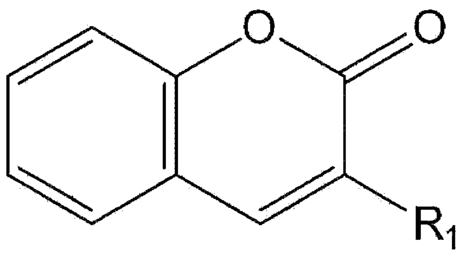

[Formula 1-B]

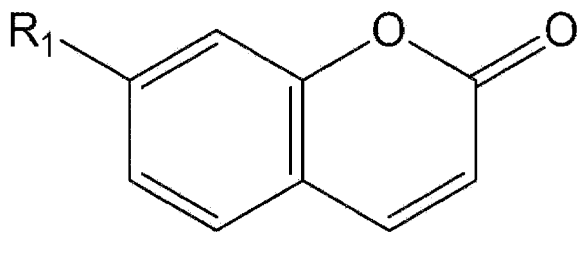

In Formulae 1-A and 1-B, $R_1$ is as defined in Formula 1.

[5] The present invention provides the lithium secondary battery of at least one of [1] to [4] above, wherein the compound represented by Formula 1 includes at least one selected from the group consisting of compounds represented by Formulae 1-1 to 1-9.

[Formula 1-1]

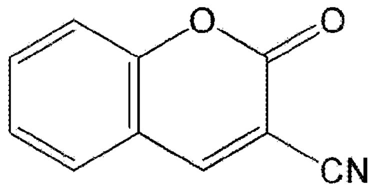

[Formula 1-2]

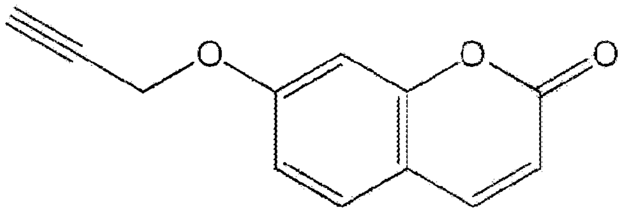

[Formula 1-3]

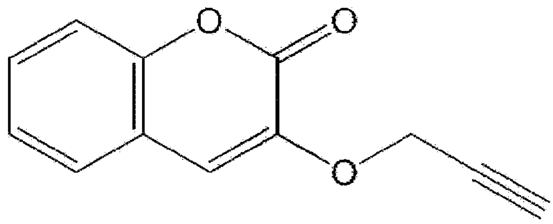

[Formula 1-4]

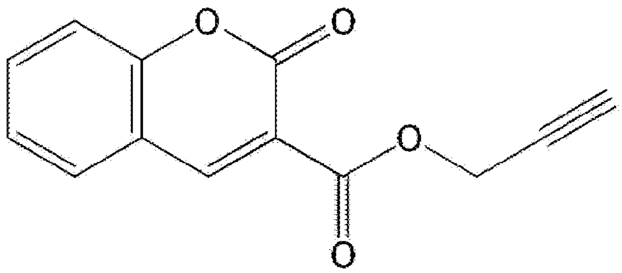

[Formula 1-5]

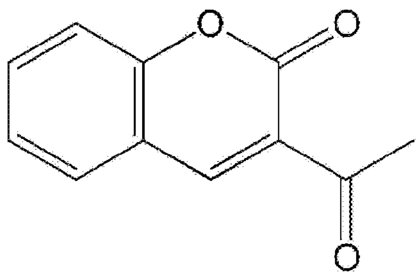

[Formula 1-6]

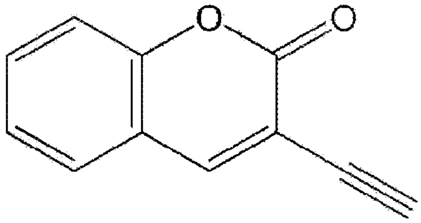

[Formula 1-7]

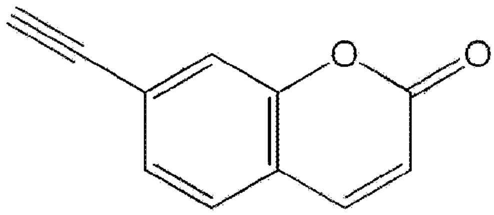

[Formula 1-8]

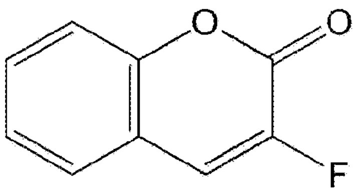

[Formula 1-9]

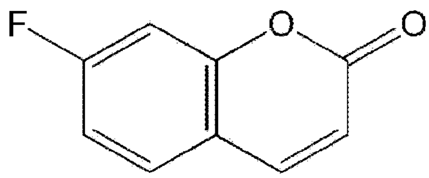

[6] The present invention provides the lithium secondary battery of at least one of [1] to [5] above, wherein the fluoroethylene carbonate is included in the non-aqueous electrolyte in an amount of 3 vol% to 20 vol%.

[7] The present invention provides the lithium secondary battery of at least one of [1] to [6] above, wherein the 1,2-difluoroethylene carbonate is included in the non-aqueous electrolyte in an amount of 10 vol% to 35 vol%.

[8] The present invention provides the lithium secondary battery of at least one of [1] to [7] above, wherein the compound represented by Formula 1 is included in an amount of 0.1 wt% to 10 wt% based on a weight of the non-aqueous electrolyte.

[9] The present invention provides the lithium secondary battery of at least one of [1] to [8] above, wherein a volume ratio of the fluoroethylene carbonate to the 1,2-difluoroethylene carbonate is in a range of 5:95 to 50:50.

[10] The present invention provides the lithium secondary battery of at least one of [1] to [9] above, wherein a total amount of the fluoroethylene carbonate and the 1,2-difluoroethylene carbonate is greater than 10 wt% and less than or equal to 50 wt% based on a total weight of the non-aqueous electrolyte.

[11] The present invention provides the lithium secondary battery of at least one of [1] to [10] above, wherein the lithium salt includes at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiFSI ($LiN(SO_2F)_2$), $LiCH_3SO_3$, $LiCF_3CO_2$, $LiCH_3CO_2$, and LiBETI ($LiN(SO_2CF_2CF_3)_2$).

[12] The present invention provides the lithium secondary battery of at least one of [1] to [11] above, wherein a solid electrolyte interface film is formed on the negative electrode after formation of the lithium secondary battery, the solid electrolyte interface film includes an inorganic component, and the inorganic component includes LiF and $CO_3^{2-}$, wherein a ratio of a weight of the LiF to a weight of the $CO_3^{2-}$ is 1.4 or more.

ADVANTAGEOUS EFFECTS

A lithium secondary battery of the present invention is characterized by using a silicon-based active material as a positive electrode active material and using fluoroethylene carbonate (FEC), 1,2-difluoroethylene carbonate (DFEC), and the compound represented by Formula 1 as non-aqueous electrolyte components.

When the 1,2-difluoroethylene carbonate is used alone and decomposed on its own, since a $CO_2$ generation reaction is more dominant, undesirable degradation of battery performance occurs. In relation to the foregoing, the present invention is characterized by using the compound represented by Formula 1 together with the 1,2-difluoroethylene carbonate, wherein the compound represented by Formula 1, as a coumarin-based compound, is ring-opened during negative electrode reduction to form a radical, and the radical formed in this case may form an inorganic-SEI film, such as LiF, while being defluorinated during negative electrode reduction of the 1,2-difluoroethylene carbonate, may form a propargyl group (C≡C) due to the defluorination, and may be ring-opened to form a polymer-SEI film at the same time. The organic/inorganic composite film formed from the above components has significantly excellent chemical and electrochemical stability.

When the 1,2-difluoroethylene carbonate and the compound represented by Formula 1 are combined, since the above compounds rapidly react and are consumed in an initial process such as initial formation, there is an effect of achieving a flexible and highly durable solid electrolyte interface (SEI) film through an SEI film reaction during the initial formation, but there is a disadvantage in terms of long-term durability. In this case, in the present invention, fluoroethylene carbonate, which has a low consumption rate and is continuously involved in the formation of the SEI film, is included in the non-aqueous electrolyte, and accordingly, long-term durability of the SEI film may be further improved when using a negative electrode including the silicon-based active material in which a new surface of the negative electrode may be generated due to an extreme degree of volume expansion.

As a result, since the lithium secondary battery according to the present invention forms and maintains the flexible and highly durable SEI film during battery operation as well as the initial process when using the negative electrode including the silicon-based active material, the lithium secondary battery according to the present invention may have excellent life performance and storage performance, particularly, excellent high-temperature life performance and high-temperature storage performance.

MODE FOR CARRYING OUT THE INVENTION

It is understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It is further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Before describing the present invention, unless otherwise specified in the present invention, the expression "*" denotes the same or different atom or a portion connected between ends of a formula (binding site).

Also, the expressions "a" and "b" in the description of "a to b carbon atoms" in the present specification each denote the number of carbon atoms included in a specific functional group. That is, the functional group may include "a" to "b" carbon atoms. For example, the expression "alkyl group having 1 to 5 carbon atoms" denotes an alkyl group including 1 to 5 carbon atoms, that is, $CH_3$-, $CH_3CH_2$-, $CH_3CH_2CH_2$-, $(CH_3)_2CH$-, $CH_3CH_2CH_2CH_2$-, $(CH_3)_2CHCH_2$-, $CH_3CH_2CH_2CH_2CH_2$-, or $(CH_3)_2CHCH_2CH_2$-.

Furthermore, an alkyl group or aryl group in the present specification may all be substituted or unsubstituted. Unless otherwise defined, the expression "substitution" denotes that at least one hydrogen bonded to carbon is substituted with an element other than hydrogen, for example, an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a cycloalkynyl group having 3 to 12 carbon atoms, a heterocycloalkyl group having 3 to 12 carbon atoms, a heterocycloalkenyl group having 3 to 12 carbon atoms, a heterocycloalkynyl group having 3 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, or a haloaryl group having 6 to 20 carbon atoms.

Hereinafter, the present invention is described in more detail.

Lithium Secondary Battery

The present invention relates to a lithium secondary battery.

The lithium secondary battery according to the present invention is characterized in that it includes: a negative electrode; a positive electrode; a separator disposed between the negative electrode and the positive electrode; and a non-aqueous electrolyte, wherein the negative electrode includes a negative electrode active material, the negative electrode active material includes a silicon-based active material, and the non-aqueous electrolyte includes a lithium salt, fluoroethylene carbonate, 1,2-difluoroethylene carbonate, and a compound represented by Formula 1 below.

[Formula 1]

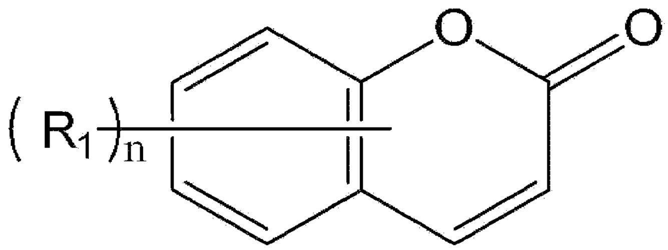

In Formula 1, $R_1$ includes a halogen, a nitrile group, a propargyl group, an ester group, an ether group, a ketone group, a carboxyl group, an unsubstituted or substituted alkyl group, an unsubstituted or substituted alkenyl group, an unsubstituted or substituted alkynyl group, an unsubstituted or substituted alkoxy group, a boron group, a borate group, an isocyanate group, an isothiocyanate group, a silyl group, a siloxane group, a sulfone group, a sulfonate group, a sulfate group, or a combination of two or more thereof, and n is an integer of 0 to 6.

The lithium secondary battery includes a negative electrode; a positive electrode; a separator; and a non-aqueous electrolyte. Specifically, the lithium secondary battery includes a negative electrode; a positive electrode facing the negative electrode; a separator disposed between the negative electrode and the positive electrode; and a non-aqueous electrolyte. The lithium secondary battery may be prepared by accommodating an electrode assembly including the negative electrode; the positive electrode facing the negative electrode; and the separator disposed between the negative electrode and the positive electrode in a battery case, and then injecting the non-aqueous electrolyte.

(1) Negative Electrode

The negative electrode includes a negative electrode active material.

The negative electrode active material includes a silicon-based active material.

The silicon-based active material has an advantage of higher capacity and higher energy density than a carbon-based active material such as graphite, but has a disadvantage of a large change in volume of the active material during charge and discharge. This volume expansion and contraction of the silicon-based active material causes disconnection of conductive connections in the negative electrode to cause an increase in resistance and degradation of life performance. Also, a solid electrolyte interface (SEI) film of the negative electrode, which has been formed in a formation process of the lithium secondary battery, may be broken by the change in the volume of the silicon-based active material, and, since this promotes an electrolyte side reaction to cause problems such as an increase in resistance due to an increase in thickness of the SEI film and depletion of the electrolyte, performance in terms of life performance and storage characteristics may consequently be degraded.

To solve these problems, the present invention is characterized by including fluoroethylene carbonate, 1,2-difluoroethylene carbonate, and the compound represented by Formula 1, which are described later, in the non-aqueous electrolyte. Through the combined use of the 1,2-difluoroethylene carbonate and the compound of Formula 1, since an SEI film with high flexibility, recoverability, and durability may not only be formed during initial formation, but the fluoroethylene carbonate may also continuously perform a formation reaction of the SEI film in a battery operation process, an SEI film with significantly excellent flexibility, recoverability, and durability is consequently formed on the negative electrode including the silicon-based active material, and thus, high-temperature cycle performance and high-temperature storage performance of the lithium secondary battery may be significantly improved. In a case in which the carbon-based active material, such as graphite, and the above-described non-aqueous electrolyte are used, since the corresponding components of the non-aqueous electrolyte may cause an unnecessary effect on battery performance, for example, the corresponding components act as resistance, it is difficult to achieve an effect in a negative electrode including only the carbon-based active material.

The silicon-based active material includes a silicon-based particle, and the silicon-based particle may include at least one selected from a compound represented by Formula A and a silicon-carbon composite.

[Formula A] $SiO_x$

In Formula A, $0 \leq x < 2$.

In Formula A, comparing to $SiO_2$, which does not react with lithium ions, and may not store lithium, it is desirable that x is within the above range. Specifically, the silicon-based particle included in the silicon-based active material may be formed of silicon (Si), or in Formula A, x may be 0. Also, the silicon-based particle may include silicon oxide, and, for example, in Formula A, x may satisfy $0.7 \leq x \leq 1.2$, and specifically, x=1.

The silicon-based active material may further include a metal doped into the silicon-based particle in addition to the silicon-based particle. Also, the silicon-based active material may further include a metal present on a surface, inside, or both the surface and the inside of the silicon-based particle in addition to the silicon-based particle. The metal may be at least one of lithium (Li), magnesium (Mg), calcium (Ca), and aluminum (Al), specifically at least one of Li and Mg, and more specifically Mg.

In a case in which the metal is included in the silicon-based active material, it may be included in the silicon-based active material in an amount of 1 wt% to 30 wt%.

The silicon-based active material may further include a carbon coating layer disposed on the surface of the silicon-based particle. The carbon coating layer may include amorphous carbon.

In a case in which the carbon coating layer is included in the silicon-based active material, the carbon coating layer may be included in the silicon-based active material in an amount of 0.5 wt% to 10 wt%, and specifically, 1 wt% to 5 wt%.

An average particle diameter ($D_{50}$) of the silicon-based active material may be in a range of 1 μm to 30 μm, and preferably, 2 μm to 15 μm in terms of ensuring structural stability during charge and discharge and reducing the side reaction with the electrolyte.

The negative electrode active material may further include a carbon-based active material in addition to the silicon-based active material.

The carbon-based active material may include at least one selected from the group consisting of artificial graphite, natural graphite, hard carbon, soft carbon, carbon black, graphene, and fibrous carbon, and may preferably include at least one selected from the group consisting of artificial graphite and natural graphite.

An average particle diameter ($D_{50}$) of the carbon-based active material may be in a range of 10 μm to 30 μm, and preferably, 15 μm to 25 μm in terms of ensuring the structural stability during charge and discharge and reducing the side reaction with the electrolyte.

In a case in which the negative electrode active material includes the silicon-based active material and the carbon-based active material, a weight ratio of the silicon-based active material to the carbon-based active material may be in a range of 1:99 to 50:50, particularly 3:97 to 20:80, and more particularly 3:97 to 10:90.

In some embodiments, the negative electrode active material may not include the carbon-based active material.

The negative electrode may include a negative electrode current collector; and a negative electrode active material layer disposed on at least one surface of the negative electrode current collector. In this case, the negative electrode active material may be included in the negative electrode active material layer.

The negative electrode current collector is not particularly limited as long as it has high conductivity without causing chemical changes in the battery. Specifically, copper, stainless steel, aluminum, nickel, titanium, fired carbon, copper or stainless steel that is surface-treated with one of carbon, nickel, titanium, silver, or the like, and an aluminum-cadmium alloy may be used as the negative electrode current collector.

The negative electrode current collector may typically have a thickness of 3 μm to 500 μm.

Microscopic irregularities may be formed on the surface of the negative electrode current collector to improve adhesion of a negative electrode active material. The negative electrode current collector, for example, may be used in various shapes such as that of a film, a sheet, a foil, a net, a porous body, a foam body, a non-woven fabric body, and the like.

The negative electrode active material layer is disposed on at least one surface of the negative electrode current collector. Specifically, the negative electrode active material layer may be disposed on one surface or both surfaces of the negative electrode current collector.

The negative electrode active material may be included in an amount of 60 wt% to 99 wt%, and preferably, 75 wt% to 95 wt% in the negative electrode active material layer.

The negative electrode active material layer may further include a binder and/or a conductive agent together with the negative electrode active material.

The binder is used to improve the performance of the battery by enhancing adhesion between the negative electrode active material layer and the negative electrode current collector, wherein the binder, for example, may include at

least one selected from the group consisting of polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, poly acrylic acid, an ethylene-propylene-diene monomer (EPDM), a sulfonated EPDM, a styrene-butadiene rubber (SBR), a fluorine rubber, and a material having hydrogen thereof substituted with Li, sodium (Na), or Ca, and may also include various copolymers thereof.

The binder may be included in an amount of 0.5 wt% to 30 wt%, preferably, 1 wt% to 15 wt%, and more preferably 5 wt% to 10 wt% in the negative electrode active material layer.

The conductive agent is not particularly limited as long as it has conductivity without causing chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The conductive agent may be included in an amount of 0.5 wt% to 30 wt%, and preferably, 1 wt% to 25 wt% in the negative electrode active material layer.

The negative electrode active material layer may have a thickness of 10 μm to 100 μm, and preferably, 50 μm to 80 μm.

The negative electrode may be prepared by coating at least one surface of the negative electrode current collector with a negative electrode slurry including the negative electrode active material, the binder, the conductive agent, and/or a solvent for forming a negative electrode slurry, and then drying and rolling the coated negative electrode current collector.

The solvent for forming a negative electrode slurry, for example, may include at least one selected from the group consisting of distilled water, NMP (N-methyl-2-pyrrolidone), ethanol, methanol, and isopropyl alcohol in terms of facilitating dispersion of the negative electrode active material, the binder, and/or the conductive agent, and may preferably include distilled water.

(2) Positive Electrode

The positive electrode faces the negative electrode.

The positive electrode may include a positive electrode current collector; and a positive electrode active material layer disposed on at least one surface of the positive electrode current collector.

The positive electrode current collector is not particularly limited as long as it has high conductivity without causing chemical changes in the battery. Specifically, the positive electrode current collector may include at least one selected from the group consisting of copper, stainless steel, aluminum, nickel, titanium, fired carbon, and an aluminum-cadmium alloy, and may preferably include aluminum.

The positive electrode current collector may typically have a thickness of 3 μm to 500 μm.

Microscopic irregularities may be formed on the surface of the positive electrode current collector to improve adhesion of a positive electrode active material. The positive electrode current collector, for example, may be used in various shapes such as that of a film, a sheet, a foil, a net, a porous body, a foam body, a non-woven fabric body, and the like.

The positive electrode active material layer is disposed on at least one surface of the positive electrode current collector. Specifically, the positive electrode active material layer may be disposed on one surface or both surfaces of the positive electrode current collector.

The positive electrode active material layer may include a positive electrode active material.

The positive electrode active material is a compound capable of reversibly intercalating and deintercalating lithium, wherein the positive electrode active material may specifically include a lithium transition metal composite oxide including lithium and at least one transition metal selected from the group consisting of nickel, cobalt, manganese, and aluminum, and preferably, a lithium transition metal composite oxide including lithium and transition metal containing nickel, cobalt, and manganese.

For example, the lithium transition metal composite oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-y}Mn_yO_2$ (where 0<Y<1), $LiMn_{2-z}Ni_zO_4$ (where 0<Z<2), etc.), lithium-nickel-cobalt-based oxide (e.g., $LiNi_{1-Y1}Co_{Y1}O_2$ (where 0<Y1<1), lithium-manganese-cobalt-based oxide (e.g., $LiCo_{1-Y2}Mn_{Y2}O_2$ (where 0<Y2<1), $LiMn_{2-z1}Co_{z1}0_4$ (where 0<Z1<2), etc.), lithium-nickel-manganese-cobalt-based oxide (e.g., $Li(Ni_pCo_qMn_{r1})O_2$ (where 0<p<1, 0<q<1, 0<r1<1, and p+q+r1=1) or $Li(Ni_{p1}Co_{q1}Mn_{r2})O_4$ (where 0<p1<2, 0<q1<2, 0<r2<2, and p1+q1+r2=2), etc.), or lithium-nickel-cobalt-transition metal (M) oxide (e.g., $Li(Ni_{p2}Co_{q2}Mn_{r3}M_{s2})O_2$ (where M is selected from the group consisting of aluminum (Al), iron (Fe), vanadium (V), chromium (Cr), titanium (Ti), tantalum

(Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a mixture of two or more thereof may be included. Among these materials, in terms of the improvement of capacity characteristics and stability of the battery, the lithium transition metal composite oxide may be $LiCoO_2$, $LiMnO_2$, $LiNiO_2$, lithium nickel-manganese-cobalt oxide (e.g., Li $(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, etc.), or lithium nickel cobalt aluminum oxide (e.g., $Li(Ni_{0.8}Co_{0.15}Al_{0.05})O_2$, etc.), and, in consideration of a significant improvement effect due to the control of types and content ratios of components constituting the lithium transition metal composite oxide, the lithium transition metal composite oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and any one thereof or a mixture of two or more thereof may be used.

More specifically, as the positive electrode active material, a lithium transition metal composite oxide, may include 60 mol% or more of nickel based on the total number of moles of transition metals included in the lithium transition metal composite oxide. Specifically, the positive electrode active material is a lithium transition metal composite oxide, wherein the transition metal includes nickel; and at least one selected from manganese, cobalt, and aluminum, and the positive electrode active material may include nickel in an amount of 60 mol% or more, and specifically, 60 mol% to 90 mol% based on the total number of moles of the transition metals. When the lithium transition metal composite oxide using a high content of nickel is used together with the above-described non-aqueous electrolyte, it is desirable in terms of reducing a gas-phase by-product generated by structural collapse.

Also, the positive electrode active material may include a lithium composite transition metal oxide represented by Formula B below.

[Formula B] $Li_{1+x}(Ni_aCo_bMn_cM_d)O_2$

In Formula B, M is at least one selected from tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), and 1+x, a, b, c, and d are atomic fractions of each independent elements, wherein $0 \leq x \leq 0.2$, $0.50 \leq a < 1$, $0 < b \leq 0.25$, $0 < c \leq 0.25$, $0 \leq d \leq 0.1$, and a+b+c+d=1.

Preferably, a, b, c, and d may satisfy $0.70 \leq a \leq 0.95$, $0.025 \leq b \leq 0.20$, $0.025 \leq c \leq 0.20$, and $0 \leq d \leq 0.05$, respectively.

Also, a, b, c, and d may satisfy $0.80 \leq a \leq 0.95$, $0.025 \leq b \leq 0.15$, $0.025 \leq c \leq 0.15$, and $0 \leq d \leq 0.05$, respectively.

Furthermore, a, b, c, and d may satisfy $0.85 \leq a \leq 0.90$, $0.05 \leq b \leq 0.10$, $0.05 \leq c \leq 0.10$, and $0 \leq d \leq 0.03$, respectively.

The positive electrode active material may be included in an amount of 80 wt% to 99 wt%, and preferably, 92 wt% to 98.5 wt% in the positive electrode active material layer in consideration of exhibition of sufficient capacity of the positive electrode active material.

The positive electrode active material layer may further include a binder and/or a conductive agent together with the above-described positive electrode active material.

The binder is a component that assists in binding between the conductive agent and the active material and in binding with the current collector, and may specifically include at least one selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluoro rubber, and preferably, polyvinylidene fluoride.

The binder may be included in an amount of 1 wt% to 20 wt%, and preferably, 1.2 wt% to 10 wt% in the positive electrode active material layer in terms of sufficiently securing a binding force between components such as the positive electrode active material.

The conductive agent may be used to assist and improve conductivity in the secondary battery, and is not particularly limited as long as it has conductivity without causing chemical changes. Specifically, the conductive agent may include at least one selected from the group consisting of graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon; metal powder such as aluminum powder and nickel powder; conductive whiskers such as zinc oxide whiskers and potassium titanate whiskers; conductive metal oxide such as titanium oxide; and polyphenylene derivatives, and may preferably include carbon black in terms of improving the conductivity.

The conductive agent may be included in an amount of 1 wt% to 20 wt%, and preferably, 1.2 wt% to 10 wt% in the positive electrode active material layer in terms of sufficiently ensuring the electrical conductivity.

The positive electrode active material layer may have a thickness of 30 $\mu$m to 400 $\mu$m, and preferably, 40 $\mu$m to 110 $\mu$m.

The positive electrode may be prepared by coating a positive electrode slurry including the positive electrode active material as well as optionally the binder, the conductive agent, and a solvent for forming the positive electrode slurry

on the positive electrode current collector, and then drying and rolling the coated positive electrode current collector.

The solvent for forming the positive electrode slurry may include an organic solvent such as NMP (N-methyl-2-pyrrolidone). A solid content of the positive electrode slurry may be in a range of 40 wt% to 90 wt%, and specifically, 50 wt% to 80 wt%.

(3) Separator

The separator may be disposed between the positive electrode and the negative electrode.

Also, a conventional porous polymer film typically used as a separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator, and a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

(4) Non-aqueous Electrolyte

The non-aqueous electrolyte according to the present invention includes a lithium salt, fluoroethylene carbonate, 1,2-difluoroethylene carbonate, and the compound represented by Formula 1 to be described later. In some cases, the non-aqueous electrolyte may further include an organic solvent and an additive.

1) Lithium Salt

Various lithium salts commonly used in a non-aqueous electrolyte for a lithium secondary battery may be used as the lithium salt used in the present invention without limitation. For example, the lithium salt may include $Li^+$ as a cation, and may include at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$, and $(CF_3CF_2SO_2)_2N^-$ as an anion.

Specifically, the lithium salt may include at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiFSI ($LiN(SO_2F)_2$), $LiCH_3SO_3$, $LiCF_3CO_2$, $LiCH_3CO_2$, and LiBETI ($LiN(SO_2CF_2CF_3)_2$). Specifically, the lithium salt may include at least one selected from the group consisting of $LiBF_4$, $LiClO_4$, $LiPF_6$, LiBOB ($LiB(C_2O_4)_2$), $LiCF_3SO_3$, LiTFSI ($LiN(SO_2CF_3)_2$), LiFSI (($LiN(SO_2F)_2$), and LiBETI ($LiN(SO_2CF_2CF_3)_2$).

The lithium salt may be included in a concentration of 0.5 M to 5 M, particularly 0.8 M to 4 M, and more particularly 0.8 M to 2.0 M in the non-aqueous electrolyte. When the concentration of the lithium salt satisfies the above range, the output characteristics of the battery may be improved by improving a lithium ion yield ($Li^+$ transference number) and a degree of dissociation of the lithium ions.

Also, the lithium salt may be included in the non-aqueous electrolyte as a remainder excluding components of the non-aqueous electrolyte, for example, the compound represented by Formula 1, a compound represented by Formula 2, and optionally an organic solvent and an additive.

2) Fluoroethylene Carbonate

The fluoroethylene carbonate (FEC) may be decomposed in the battery operation process to provide a composite component of an organic component and an inorganic component, such as LiF, to the SEI film. The fluoroethylene carbonate-derived SEI film has excellent long-term durability. Particularly, a product by combination of 1,2-difluoroethylene carbonate and the compound of Formula 1 to be described later and a reaction thereof exhibits an excellent effect in a process such as initial formation, but it is difficult to exhibit an additional effect during long-term battery operation. In this case, the fluoroethylene carbonate may improve the long-term durability of the SEI film by continuously providing a SEI film component when a new surface of the negative electrode is generated and the SEI film is broken due to the volume expansion of the silicon-based active material during charge and discharge of the battery. Since the fluoroethylene carbonate has a smaller number of fluorines than the 1,2-difluoroethylene carbonate and has a small degree of contribution to an overall increase in LiF content of the SEI film, it is difficult to achieve a desired effect by using the fluoroethylene carbonate alone.

The fluoroethylene carbonate may mean mono-fluoroethylene carbonate.

The fluoroethylene carbonate may be included in the non-aqueous electrolyte in an amount of 3 vol% to 20 vol%,

particularly 5 vol% to 15 vol%, and more particularly 7 vol% to 12 vol%. When the amount is within the above range, an appropriate level of SEI film formation is possible on the negative electrode including the silicon-based active material, and an increase in resistance, which is a concern when adding an excessive amount, may be prevented.

Also, the fluoroethylene carbonate may be included in the non-aqueous electrolyte in an amount of 3 wt% to 20 wt%, particularly 5 wt% to 15 wt%, and more particularly 7 wt% to 12 wt%.

3) 1,2-difluoroethylene Carbonate

The 1,2-difluoroethylene carbonate is a compound containing two fluorine atoms in its molecular structure, wherein an increase in amount of an inorganic component, such as LiF, contributing to improve the durability of the SEI film may be expected. Also, a carbon-carbon triple bond or a propargyl group (C≡C) is formed by defluorination of the 1,2-difluoroethylene carbonate, and this component may be expected to form a polymer-type SEI film during ring-opening of the chemical structure. However, the 1,2-difluoroethylene carbonate has a problem in that it is difficult to form an SEI film having the desired organic/inorganic composite component because $CO_2$ generation and formation of a structure in a form of a single molecule are dominant rather than ring-opening in a polymer form during its own decomposition reaction.

To solve these problems, since the present invention uses the compound represented by Formula 1 to be described later together with the 1,2-difluoroethylene carbonate and the compound represented by Formula 1 forms a radical during nega tive electrode reduction, a ring-opening reaction of the 1,2-difluoroethylene carbonate may be promoted to induce formation of an SEI film having the organic/inorganic composite component and simultaneously improved flexibility, recoverability, and durability. That is, it may be understood that the formation of the SEI film derived from the 1,2-difluoroethylene carbonate may be preferably achieved only when the compound represented by Formula 1 is used in combination. That is, the SEI film derived from the 1,2-difluoroethylene carbonate by a radical reaction caused by the compound represented by Formula 1 has the organic/ inorganic composite component, and accordingly, the flexibility, recoverability, and durability of the SEI film may be simultaneously improved. This is very suitable for use in the silicon-based active material in which a degree of volume expansion/contraction is severe during initial formation process and battery operation.

The 1,2-difluoroethylene carbonate may be included in the non-aqueous electrolyte in an amount of 10 vol% to 35 vol%, particularly 15 vol% to 30 vol%, and more particularly 17 vol% to 22 vol%.

The 1,2-difluoroethylene carbonate may be included in the non-aqueous electrolyte in an amount of 10 wt% to 35 wt%, particularly 15 wt% to 32 wt%, and more particularly 18 wt% to 25 wt%.

A volume ratio of the fluoroethylene carbonate to the 1,2-difluoroethylene carbonate may be in a range of 5:95 to 50:50, particularly 25:75 to 40:60, and more particularly 28:72 to 35:65.

A weight ratio of the fluoroethylene carbonate to the 1,2-difluoroethylene carbonate may be in a range of 5:95 to 50:50, particularly 15:85 to 45:55, and more particularly 30:70 to 35:65.

A total amount of the fluoroethylene carbonate and the 1,2-difluoroethylene carbonate may be greater than 10 wt% and less than or equal to 50 wt%, particularly 15 wt% to 45 wt%, more particularly 25 wt% to 42 wt%, and even more particularly 30 wt% to 35 wt% based on a total weight of the non-aqueous electrolyte. When the total amount is within the above range, the above-described effects of the fluoroethylene carbonate and the 1,2-difluoroethylene carbonate may be harmoniously improved and achieved.

4) The Compound Represented by Formula 1

The non-aqueous electrolyte of the present invention includes the compound represented by Formula 1 below.

[Formula 1]

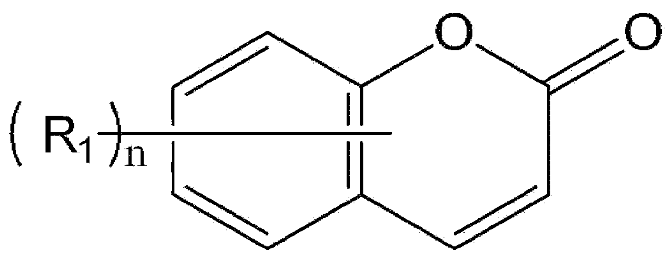

In Formula 1, $R_1$ includes a halogen, a nitrile group, a propargyl group, an ester group, an ether group, a ketone group, a carboxyl group, an unsubstituted or substituted alkyl group, an unsubstituted or substituted alkenyl group, an

unsubstituted or substituted alkynyl group, an unsubstituted or substituted alkoxy group, a boron group, a borate group, an isocyanate group, an isothiocyanate group, a silyl group, a siloxane group, a sulfone group, a sulfonate group, a sulfate group, or a combination of two or more thereof, and n is an integer of 0 to 6.

The compound represented by Formula 1 has excellent negative electrode reducing power, and may form a radical during negative electrode reduction. Since the radical formed therefrom may promote the ring-opening reaction of the 1,2-difluoroethylene carbonate as described above, an SEI film with high flexibility, recoverability, and durability may be achieved in the initial formation process.

Also, the compound represented by Formula 1 may be ring-opened during initial formation to form a polyethylene oxide-based polymer-type film on the electrode, and this polymer-type film has excellent flexibility and recoverability.

In Formula 1, $R_1$ may specifically be a halogen (the halogen may be selected from fluorine (F), chlorine (Cl), bromine (Br), and iodine (I), and may specifically be F), a nitrile group, a propargyl group, an ester group, an ether group, or a combination of two or more thereof. Since these substituents may enhance reducing power of a first additive, effects of smooth forming the SEI film and improving lithium ion transfer performance may also be achieved.

In Formula 1, n may be an integer selected from 0 to 6, and may specifically be an integer selected from 1 to 6, and more specifically, n may be 1. In Formula 1, when n is 2 or more, each $R_1$ may be the same or different form each other.

Specifically, the compound represented by Formula 1 may include at least one selected from the group consisting of a compound represented by Formula 1-A below and a compound represented by Formula 1-B below.

[Formula 1-A]

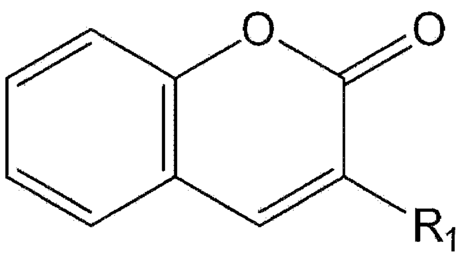

[Formula 1-B]

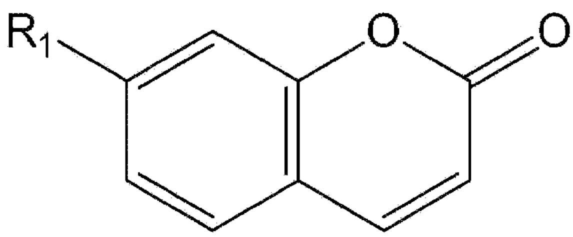

In Formulae 1-A and 1-B, $R_1$ is as defined in Formula 1.

The compounds represented by Formulae 1-A and 1-B have structures in which substituents exist at positions 3 and 7 (based on IUPAC nomenclature) of a ring structure, respectively, wherein, in this case, it is desirable in terms of the fact that it is advantageous to synthesize at the above-described positions in comparison to other substitution positions.

Specifically, the compound represented by Formula 1 may include at least one selected from the group consisting of compounds represented by Formula 1-1 to Formula 1-9 below. The compound represented by Formula 1 may specifically include at least one selected from the group consisting of compounds represented by Formula 1-1, Formula 1-2, Formula 1-3, Formula 1-4, and Formula 1-9, in terms of the fact that it is more advantageous to form an SEI film by being more smoothly reduced at the negative electrode, may more specifically include at least one selected from the group consisting of the compounds represented by Formula 1-1 and Formula 1-2 below, and may more specifically include the compound represented by Formula 1-1 below.

[Formula 1-1]

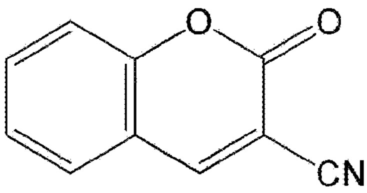

[Formula 1-2]

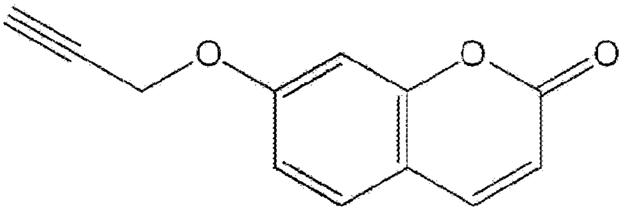

[Formula 1-3]

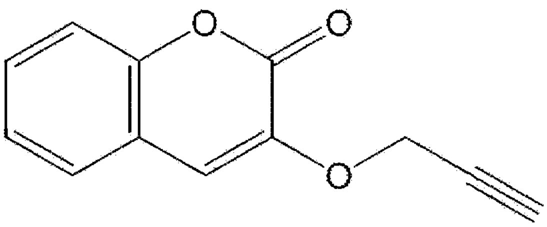

[Formula 1-4]

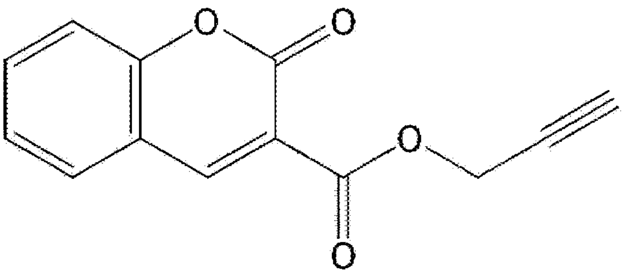

[Formula 1-5]

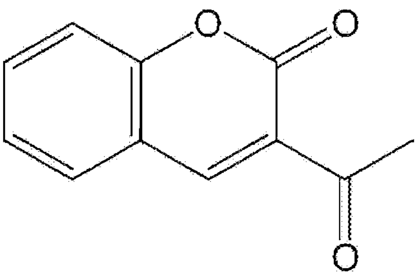

[Formula 1-6]

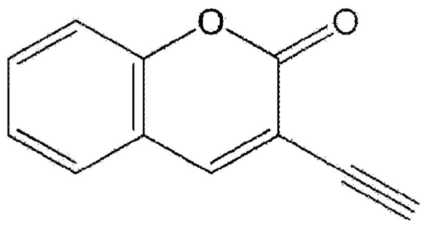

[Formula 1-7]

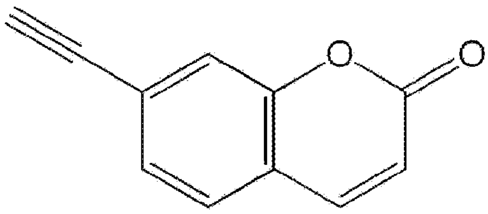

[Formula 1-8]

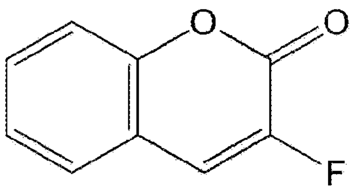

[Formula 1-9]

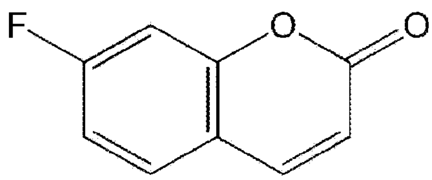

The compound represented by Formula 1 may be included in the non-aqueous electrolyte in an amount of 0.1 wt% to 10 wt%, particularly 1 wt% to 7 wt%, and more particularly 3.5 wt% to 6 wt%. When the amount of the compound represented by Formula 1 is within the above-described range, the ring-opening reaction of the 1,2-difluoroethylene carbonate may be sufficiently caused, and a concern about an increase in resistance when an excessive amount is added may be prevented.

A ratio of a weight of the compound represented by Formula 1 to a weight of the 1,2-difluoroethylene carbonate may be in a range of 0.2 to 1, particularly 0.25 to 0.95, and more particularly 0.4 to 0.7. When the ratio is within the above range, the ring-opening reaction of the 1,2-difluoroethylene carbonate may be sufficiently caused when the amount of the compound represented by Formula 1 is within the above-described range, and an organic/inorganic composite SEI film according to the corresponding configuration combination may be formed at a sufficient level.

A ratio of a weight of the compound represented by Formula 1 to a weight of the fluoroethylene carbonate may be in a range of 0.1 to 0.5, and may specifically be in a range of 0.15 to 0.45. Also, a ratio of a weight of the compound represented by Formula 1 to a total weight of the fluoroethylene carbonate and the 1,2-difluoroethylene carbonate may be in a range of 0.1 to 0.3, and may specifically be in a range of 0.12 to 0.20. When the ratio is within the above range, it is good in that initial and long-term life performance of the lithium secondary battery and the negative electrode using the silicon-based active material may be improved to an excellent level.

5) Organic Solvent

The non-aqueous electrolyte may further include an organic solvent together with the above-described components.

As the organic solvent, any non-aqueous solvent commonly used in a lithium secondary battery is not particularly limited as long as decomposition due to an oxidation reaction during charge and discharge of the lithium secondary battery may be minimized.

The organic solvent may be included in the non-aqueous electrolyte in a volume percentage (vol%) of a remaining amount excluding the fluoroethylene carbonate and the 1,2-difluoroethylene carbonate.

Specifically, the organic solvent may include at least one selected from the group consisting of a cyclic carbonate-based organic solvent, a linear carbonate-based organic solvent, a linear ester-based organic solvent, and a cyclic ester-based organic solvent.

Specifically, the organic solvent may include at least one selected from a cyclic carbonate-based organic solvent and a linear carbonate-based organic solvent. Also, the organic solvent may include a linear carbonate-based organic solvent in terms of the fact that the above-described fluoroethylene carbonate and 1,2-difluoroethylene carbonate replace the cyclic carbonate organic solvent.

The cyclic carbonate-based organic solvent is an organic solvent which may well dissociate the lithium salt in the electrolyte due to high permittivity as a highly viscous organic solvent, wherein the cyclic carbonate-based organic solvent may specifically include at least one organic solvent selected from the group consisting of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, and may more specifically include ethylene carbonate (EC). Also, the cyclic carbonate-based organic solvent or ethylene carbonate may not be included in the non-aqueous electrolyte of the present invention.

Also, the linear carbonate-based organic solvent is an organic solvent having low viscosity and low permittivity, wherein the linear carbonate-based organic solvent may specifically include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, may more specifically include at least one selected from the group consisting of ethyl methyl carbonate (EMC) and diethyl carbonate (DEC), may more specifically include ethyl methyl carbonate (EMC) and diethyl carbonate (DEC), and may even more specifically include ethyl methyl carbonate (EMC) and diethyl carbonate (DEC) in a volume ratio of 50:50 to 99:1, particularly 60:40 to 90:10, more particularly 60:40 to 75:25, and even more particularly 62:38 to 66:34.

In a case in which the organic solvent includes the linear carbonate-based solvent, a ratio of a total volume of the fluoroethylene carbonate and the 1,2-difluoroethylene carbonate to a volume of the linear carbonate-based solvent may be in a range of 10:90 to 50:50, and specifically, 20:80 to 45:55.

The linear ester-based organic solvent may specifically include at least one selected from the group consisting of methyl acetate, ethyl acetate, propyl acetate, methyl propionate, ethyl propionate, propyl propionate, and butyl propionate.

Also, the cyclic ester-based organic solvent may specifically include at least one selected from the group consisting of $\gamma$-butyrolactone, $\gamma$-valerolactone, $\gamma$-caprolactone, $\sigma$-valerolactone, and $\sigma$-caprolactone.

The organic solvent may be used by adding an organic solvent typically used in a non-aqueous electrolyte without limitation, if necessary. For example, the organic solvent may further include at least one organic solvent selected from an ether-based organic solvent, a glyme-based solvent, and a nitrile-based organic solvent.

As the ether-based solvent, any one selected from the group consisting of dimethyl ether, diethyl ether, dipropyl ether, methylethyl ether, methylpropyl ether, ehtylpropyl ether, 1,3-dioxolane (DOL), and 2,2-bis(trifluoromethyl)-1,3-dioxolane (TFDOL) or a mixture of two or more thereof may be used, but the ether-based solvent is not limited thereto.

The glyme-based solvent is a solvent having higher permittivity and lower surface tension than the linear carbonate-based organic solvent as well as less reactivity with metal, wherein the glyme-based solvent may include at least one selected from the group consisting of dimethoxyethane (glyme, DME), diethoxyethane, diglyme, tri-glyme (triglyme), and tetra-glyme (TEGDME), but is not limited thereto.

The nitrile-based solvent may be at least one selected from the group consisting of acetonitrile, propionitrile, butyronitrile, valeronitrile, caprylontrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

6) Additive

The non-aqueous electrolyte may further include an additive together with the above-described components.

Specifically, the additive may be at least one selected from the group consisting of vinylene carbonate, vinyl

ethylene carbonate, fluoroethylene carbonate, propane sultone, propene sultone, succinonitrile, adiponitrile, ethylene sulfate, LiODFB (lithium difluorooxalatoborate), LiBOB (lithium bis-(oxalato)borate), TMSPa (tris(trimethylsilyl) phosphate), and TMSPi (tris(trimethylsilyl) phosphite).

The additive may be included in the non-aqueous electrolyte in an amount of 0.1 wt% to 15 wt%, but the present invention is not limited thereto.

In the lithium secondary battery of the present invention, a solid electrolyte interface film is formed on the negative electrode after formation of the lithium secondary battery, the solid electrolyte interface film includes an inorganic component, and the inorganic component includes LiF and $CO_3^{2-}$, wherein a ratio of a weight of the LiF to a weight of the $CO_3^{2-}$ may be 1.4 or more.

The non-aqueous electrolyte components (e.g., fluoroethylene carbonate, 1,2-difluoroethylene carbonate, the compound represented by Formula 1, etc.) may be decomposed by the formation process to form a solid electrolyte interface film (SEI film).

A method known in the art may be used as the formation process without limitation, and the formation process is not particularly limited. For example, the formation process may be performed by charging at a C-rate of 0.1 C to 1 C at room temperature (20±5°C) to a state of charge (SOC) of 10% or more, particularly to an SOC of 60% or more, and more particularly to an SOC of 100%. Also, the formation process may be performed under the above C-rate and SOC conditions at a temperature of 45°C to 60°C and a pressure of 0.5 kgf/$cm^2$ to 20 kgf/$cm^2$.

The inorganic component of the solid electrolyte interface film and an amount thereof may be measured by a method including the following steps.

(a) separating a negative electrode by disassembling the lithium secondary battery subjected to formation;
(b) washing the separated negative electrode;
(c) extracting a solid electrolyte interface film on a surface of the negative electrode by immersing the washed negative electrode in an extraction solvent; and
(d) analyzing an inorganic component in the extraction solvent using capillary electrophoresis.

The separating of the negative electrode may be performed in an inert gas atmosphere.

The washing of the separated negative electrode is to prevent interference by non-aqueous electrolyte components. The washing may be performed by immersing the negative electrode in a washing solvent.

The washing solvent may include at least one organic solvent selected from the group consisting of a cyclic ether-based solvent, an ester-based organic solvent, or a nitrile-based organic solvent. For example, in a case in which a propionate-based organic solvent is used as the organic solvent for the non-aqueous electrolyte, a carbonate-based organic solvent may be used as the washing solvent, or in a case in which a linear carbonate-based organic solvent is used as the organic solvent for the non-aqueous electrolyte, a propionate-based organic solvent may be used as the washing solvent.

In the washing, the washing solvent used and washing time may vary depending on a size of the negative electrode, wherein the washing may specifically be performed by immersing the electrode in 10 mL to 50 mL of the washing solvent for 15 minutes to 1 hour when based on a negative electrode area of 15 $cm^2$ to 35 $cm^2$.

After the washing, a step of drying the electrode in an inert gas atmosphere to remove the used washing solvent may be additionally performed. The drying may be performed at room temperature (20±5°C) for about 5 minutes to 2 hours depending on electrode conditions.

The extraction solvent may be a highly polar solvent, and the highly polar solvent may include at least one solvent selected from the group consisting of deuterium oxide ($D_2O$), tetrahydrofuran (THF), acetonitrile, acetone, hexamethylphosphoramide (HMPA), N,N-dimethylformamide, and dimethyl sulfoxide.

The extracting of the solid electrolyte interface film may be appropriately changed according to experimental conditions such as the size of the electrode, a cycle of the battery, and storage conditions during extraction, wherein the extracting may specifically be performed by immersing the electrode in 1 mL to 5 mL of the extraction solvent at room temperature (25±5°C) for 12 hours to 48 hours when based on the negative electrode area of 15 $cm^2$ to 35 $cm^2$.

There is a case where electrode metal components dissolved from the partially degraded electrode are dissolved and present in the extraction solvent during the extracting. In this case, since it is difficult to perform a clear analysis in a subsequent process, a step of filtering for removing these impurities may be further included.

The filtering may appropriately use a method such as centrifugation or filtering depending on amounts of byproducts.

Thereafter, analysis of the inorganic component in the extraction solvent obtained after filtration may be performed using the capillary electrophoresis.

In this specification, "capillary electrophoresis" refers to a method of measuring structure and amount of a component by using a chemical phenomenon in which charges in a solution move toward an electrode of opposite charge under an electric field between electrodes, wherein the structure or amount of the component (type) does not change

depending on specific devices and conditions. In the present invention, measurement may be performed using an AB SCIEX MDQ plus device (Capillary: 75 μm ID, 50 cm; Injection: 0.5 psi, 3 sec; Separation: 20 kV, 0.1 psi; Detector: 230 nm UV) using a SCIEX anion analysis kit (pH 5.5) as a run buffer.

In addition to the above description, the measurement of the component of the solid electrolyte interface film may be referred to Korean Patent Application Laid-open Publication No. 10-2020-0005870.

With respect to the lithium secondary battery according to the present invention, the ratio of the weight of the LiF to the weight of the $CO_3^{2-}$ may be in a range of 1.4 or more, particularly 1.4 to 3.0, more particularly 1.5 to 2.7, and even more particularly 2.0 to 2.6. When the ratio is within the above range, it may be evaluated that a composite film of the inorganic component and organic component of the SEI film in the negative electrode is appropriately formed at a sufficient level, and particularly, overall performance of the battery including the silicon-based negative electrode may be significantly improved.

The weight of the LiF per area of the solid electrolyte interface film may be 100 $\mu g/cm^2$ or more, particularly 100 $\mu g/cm^2$ to 250 $\mu g/cm^2$, and more particularly 190 $\mu g/cm^2$ to 240 $\mu g/cm^2$.

The weight of the $CO_3^{2-}$ per area of the solid electrolyte interface film may be 60 $\mu g/cm^2$ or more, particularly 75 $\mu g/cm^2$ to 100 $\mu g/cm^2$, and more particularly 77 $\mu g/cm^2$ to 82 $\mu g/cm^2$.

A shape of the lithium secondary battery of the present invention is not particularly limited, but a cylindrical type using a can, a prismatic type, a pouch type, or a coin type may be used.

Hereinafter, the present invention is described in detail, according to specific examples. However, the following examples are merely presented to exemplify the present invention, and the scope of the present invention is not limited thereto. It is apparent to those skilled in the art that various modifications and alterations are possible within the scope and technical spirit of the present invention. Such modifications and alterations fall within the scope of claims included herein.

## Examples and Comparative Examples

### Example 1

(Preparation of Non-aqueous Electrolyte)

An organic solvent was prepared by mixing fluoroethylene carbonate, 1,2-difluoroethylene carbonate, diethyl carbonate, and ethyl methyl carbonate in a volume ratio of 5:20:45:30.

A non-aqueous electrolyte was prepared by adding $LiPF_6$, as a lithium salt, and the compound represented by Formula 1-1 to the above organic solvent.

The lithium salt was added into the non-aqueous electrolyte at a molar concentration of 1.5 M.

The compound represented by Formula 1-1 was added in an amount of 5 wt% into the non-aqueous electrolyte.

In the non-aqueous electrolyte, a weight percentage of the fluoroethylene carbonate was 5.5 wt%, and a weight percentage of the 1,2-difluoroethylene carbonate was 22.2 wt%.

(Lithium Secondary Battery Preparation)

A positive electrode active material ($LiNi_{0.85}Co_{0.05}Mn_{0.07}Al_{0.03}O_2$) : a conductive agent (carbon nanotubes) : a binder (polyvinylidene fluoride) were added in a weight ratio of 97.74:0.70:1.56 to N-methyl-2-pyrrolidone (NMP), as a solvent, to prepare a positive electrode material mixture slurry (solid content 75.5 wt%). One surface of a 15 μm thick positive electrode current collector (Al thin film) was coated with the positive electrode material mixture slurry, dried, and then roll-pressed to prepare a positive electrode.

A negative electrode active material (Si) : a conductive agent (carbon black) : a binder (styrene-butadiene rubber) were added to distilled water, as a solvent, in a weight ratio of 70.0:20.3:9.7 to prepare a negative electrode material mixture slurry (solid content 26 wt%). One surface of a 15 μm thick negative electrode current collector (Cu thin film) was coated with the negative electrode material mixture slurry, dried, and then roll-pressed to prepare a negative electrode.

After a polyethylene porous film separator was disposed between the above-prepared positive electrode and negative electrode in a dry room, the above-prepared non-aqueous electrolyte was injected to prepare a lithium secondary battery.

(Component Analysis of Solid Electrolyte Interface Film)

The above-prepared lithium secondary battery was subjected to formation by charging it at a C-rate of 0.33 C to an SOC of 100% at room temperature (20±5°C).

Each of the lithium secondary batteries subjected to formation was disassembled in an inert gas atmosphere to obtain a negative electrode (area: 65 $cm^2$), and the negative electrode was washed by being immersed in 30 mL of a

dimethyl carbonate (DMC) washing solvent for 30 minutes.

Next, extracting was performed by immersing the washed electrode in 10 mL of deuterium oxide ($D_2O$) for 24 hours at room temperature (25±5°C).

Subsequently, after the extracting, the extraction solvent was filtered using a filter, and qualitative and quantitative analysis of inorganic components in the extraction solvent was performed using capillary electrophoresis. Among them, results of content analysis of LiF and $CO_3^{2-}$ are presented in Table 1 below.

The capillary electrophoresis was performed using an AB SCIEX MDQ plus device (Capillary: 75 μm ID, 50 cm; Injection: 0.5 psi, 3 sec; Separation: 20 kV, 0.1 psi; Detector: 230 nm UV) using a SCIEX anion analysis kit (pH 5.5) as a run buffer.

Example 2

(Preparation of Non-aqueous Electrolyte)

An organic solvent was prepared by mixing fluoroethylene carbonate, 1,2-difluoroethylene carbonate, diethyl carbonate, and ethyl methyl carbonate in a volume ratio of 15:20:45:20.

A non-aqueous electrolyte was prepared by adding $LiPF_6$, as a lithium salt, and the compound represented by Formula 1-1 to the above organic solvent.

The lithium salt was added into the non-aqueous electrolyte at a molar concentration of 1.5 M.

The compound represented by Formula 1-1 was added in an amount of 5 wt% into the non-aqueous electrolyte.

In the non-aqueous electrolyte, a weight percentage of the fluoroethylene carbonate was 15.9 wt%, and a weight percentage of the 1,2-difluoroethylene carbonate was 21.4 wt%.

(Lithium Secondary Battery Preparation)

A lithium secondary battery was prepared in the same manner as in Example 1 except that the above-prepared non-aqueous electrolyte was used.

Example 3

(Preparation of Non-aqueous Electrolyte)

An organic solvent was prepared by mixing fluoroethylene carbonate, 1,2-difluoroethylene carbonate, diethyl carbonate, and ethyl methyl carbonate in a volume ratio of 10:15:45:30.

A non-aqueous electrolyte was prepared by adding $LiPF_6$, as a lithium salt, and the compound represented by Formula 1-1 to the above organic solvent.

The lithium salt was added into the non-aqueous electrolyte at a molar concentration of 1.5 M.

The compound represented by Formula 1-1 was added in an amount of 5 wt% into the non-aqueous electrolyte.

In the non-aqueous electrolyte, a weight percentage of the fluoroethylene carbonate was 11.0 wt%, and a weight percentage of the 1,2-difluoroethylene carbonate was 16.6 wt%.

(Lithium Secondary Battery Preparation)

A lithium secondary battery was prepared in the same manner as in Example 1 except that the above-prepared non-aqueous electrolyte was used.

Example 4

(Preparation of Non-aqueous Electrolyte)

An organic solvent was prepared by mixing fluoroethylene carbonate, 1,2-difluoroethylene carbonate, diethyl carbonate, and ethyl methyl carbonate in a volume ratio of 10:20:45:25.

A non-aqueous electrolyte was prepared by adding $LiPF_6$, as a lithium salt, and the compound represented by Formula 1-1 to the above organic solvent.

The lithium salt was added into the non-aqueous electrolyte at a molar concentration of 1.5 M.

The compound represented by Formula 1-1 was added in an amount of 5 wt% into the non-aqueous electrolyte.

In the non-aqueous electrolyte, a weight percentage of the fluoroethylene carbonate was 10.8 wt%, and a weight percentage of the 1,2-difluoroethylene carbonate was 21.8 wt%.

(Lithium Secondary Battery Preparation)

A lithium secondary battery was prepared in the same manner as in Example 1 except that the above-prepared non-aqueous electrolyte was used.

Example 5

(Preparation of Non-aqueous Electrolyte)

An organic solvent was prepared by mixing fluoroethylene carbonate, 1,2-difluoroethylene carbonate, diethyl carbonate, and ethyl methyl carbonate in a volume ratio of 10:30:45:15.

A non-aqueous electrolyte was prepared by adding $LiPF_6$, as a lithium salt, and the compound represented by Formula 1-1 to the above organic solvent.

The lithium salt was added into the non-aqueous electrolyte at a molar concentration of 1.5 M.

The compound represented by Formula 1-1 was added in an amount of 5 wt% into the non-aqueous electrolyte.

In the non-aqueous electrolyte, a weight percentage of the fluoroethylene carbonate was 10.4 wt%, and a weight percentage of the 1,2-difluoroethylene carbonate was 31.5 wt%.

(Lithium Secondary Battery Preparation)

A lithium secondary battery was prepared in the same manner as in Example 1 except that the above-prepared non-aqueous electrolyte was used.

Example 6

(Preparation of Non-aqueous Electrolyte)

A non-aqueous electrolyte was prepared in the same manner as in Example 1 except that the compound represented by Formula 1-1 was not used and the compound represented by Formula 1-2 was included in the non-aqueous electrolyte in an amount of 5 wt%.

(Lithium Secondary Battery Preparation)

A lithium secondary battery was prepared in the same manner as in Example 1 except that the above-prepared non-aqueous electrolyte was used.

Example 7

(Preparation of Non-aqueous Electrolyte)

A non-aqueous electrolyte was prepared in the same manner as in Example 1 except that the compound represented by Formula 1-1 was not used and the compound represented by Formula 1-3 was included in the non-aqueous electrolyte in an amount of 5 wt%.

(Lithium Secondary Battery Preparation)

A lithium secondary battery was prepared in the same manner as in Example 1 except that the above-prepared non-aqueous electrolyte was used.

Example 8

(Preparation of Non-aqueous Electrolyte)

A non-aqueous electrolyte was prepared in the same manner as in Example 1 except that the compound represented by Formula 1-1 was not used and the compound represented by Formula 1-4 was included in the non-aqueous electrolyte in an amount of 5 wt%.

(Lithium Secondary Battery Preparation)

A lithium secondary battery was prepared in the same manner as in Example 1 except that the above-prepared non-aqueous electrolyte was used.

Example 9

(Preparation of Non-aqueous Electrolyte)

A non-aqueous electrolyte was prepared in the same manner as in Example 1 except that the compound represented by Formula 1-1 was not used and the compound represented by Formula 1-9 was included in the non-aqueous electrolyte in an amount of 5 wt%.

(Lithium Secondary Battery Preparation)

A lithium secondary battery was prepared in the same manner as in Example 1 except that the above-prepared non-aqueous electrolyte was used.

Comparative Example 1

(Preparation of Non-aqueous Electrolyte)

An organic solvent was prepared by mixing ethylene carbonate, 1,2-difluoroethylene carbonate, diethyl carbonate, and ethyl methyl carbonate in a volume ratio of 10:20:45:25.

A non-aqueous electrolyte was prepared by adding $LiPF_6$, as a lithium salt, and the compound represented by Formula 1-1 to the above organic solvent.

The lithium salt was added into the non-aqueous electrolyte at a molar concentration of 1.5 M.

The compound represented by Formula 1-1 was added in an amount of 5 wt% into the non-aqueous electrolyte.

In the non-aqueous electrolyte, a weight percentage of the ethylene carbonate was 9.6 wt%, and a weight percentage of the 1,2-difluoroethylene carbonate was 22.1 wt%.

(Lithium Secondary Battery Preparation)

A lithium secondary battery was prepared in the same manner as in Example 1 except that the above-prepared non-aqueous electrolyte was used.

Comparative Example 2

(Preparation of Non-aqueous Electrolyte)

An organic solvent was prepared by mixing fluoroethylene carbonate, diethyl carbonate, and ethyl methyl carbonate in a volume ratio of 10:45:45.

A non-aqueous electrolyte was prepared by adding $LiPF_6$, as a lithium salt, and the compound represented by Formula 1-1 to the above organic solvent.

The lithium salt was added into the non-aqueous electrolyte at a molar concentration of 1.5 M.

The compound represented by Formula 1-1 was added in an amount of 5 wt% into the non-aqueous electrolyte.

In the non-aqueous electrolyte, a weight percentage of the fluoroethylene carbonate was 11.6 wt%.

(Lithium Secondary Battery Preparation)

A lithium secondary battery was prepared in the same manner as in Example 1 except that the above-prepared non-aqueous electrolyte was used.

Comparative Example 3

(Preparation of Non-aqueous Electrolyte)

A non-aqueous electrolyte was prepared in the same manner as in Example 1 except that the compound

represented by Formula 1-1 was not included in the non-aqueous electrolyte.

(Lithium Secondary Battery Preparation)

A lithium secondary battery was prepared in the same manner as in Example 1 except that the above-prepared non-aqueous electrolyte was used.

Comparative Example 4

(Preparation of Non-aqueous Electrolyte)

An organic solvent was prepared by mixing 1,2-difluoroethylene carbonate, diethyl carbonate, and ethyl methyl carbonate in a volume ratio of 20:45:35.
A non-aqueous electrolyte was prepared by adding $LiPF_6$, as a lithium salt, and the compound represented by Formula 1-1 to the above organic solvent.
The lithium salt was added into the non-aqueous electrolyte at a molar concentration of 1.5 M.
The compound represented by Formula 1-1 was added in an amount of 5 wt% into the non-aqueous electrolyte.
In the non-aqueous electrolyte, a weight percentage of the 1,2-difluoroethylene carbonate was 22.6 wt%.

(Lithium Secondary Battery Preparation)

A lithium secondary battery was prepared in the same manner as in Example 1 except that the above-prepared non-aqueous electrolyte was used.

[Table 1]

| | LiF content (per negative electrode area , $\mu g/cm^2$) | $CO_3^{2-}$ content (per negative electrode area , $\mu g/cm^2$) | LiF content/ $CO_3^{2-}$ content |
|---|---|---|---|
| Example 1 | 150 | 85 | 1.8 |
| Example 2 | 140 | 75 | 1.9 |
| Example 3 | 185 | 95 | 1.9 |
| Example 4 | 200 | 80 | 2.5 |
| Example 5 | 135 | 80 | 1.7 |
| Example 6 | 120 | 75 | 1. 6 |
| Example 7 | 130 | 80 | 1.6 |
| Example 8 | 120 | 70 | 1.7 |
| Example 9 | 135 | 85 | 1.6 |
| Comparative Example 1 | 35 | 40 | 0.9 |
| Comparative Example 2 | 40 | 40 | 1 |
| Comparative Example 3 | 40 | 35 | 1.1 |
| Comparative Example 4 | 35 | 30 | 1.2 |

Experimental Example 1: High-temperature Cycle Charge and Discharge Performance Evaluation

That each of the above-prepared lithium secondary batteries of Examples 1 to 9 and Comparative Examples 1 to 4 was charged at 0.33 C to 4.2 V under a constant current/constant voltage (CC/CV) condition at 45°C using electrochemical charge/discharge equipment and was then discharged at a CC of 0.33 C to 3.0 V was set as one cycle, 200 cycles of the charging and discharging were performed, and capacity retention, resistance increase rate, gas generation amount, and metal dissolution amount were evaluated as follows.

Experimental Example 1-1: Capacity Retention Evaluation

After charging and discharging under the above conditions, a capacity retention was calculated by the following

equation, and the results thereof are presented in Table 2 below.

Capacity retention (%) = (discharge capacity after 200 cycles/discharge capacity after one cycle) × 100

Experimental Example 1-2: Resistance Increase Rate Evaluation

After one cycle of the charging and discharging, discharge capacity after one cycle was measured using electrochemical charge/discharge equipment, a state of charge (SOC) was adjusted to 50%, and a pulse of 2.5 C was then applied for 10 seconds to calculate initial resistance through a difference between a voltage before the application of the pulse and a voltage after the application of the pulse.

After 200 cycles of the charging and discharging, resistance after 200 cycles was calculated in the same manner as above, a resistance increase rate was calculated using the following equation, and the results thereof are presented in Table 2 below.

Resistance increase rate (%) = (resistance after 200 cycles - initial resistance)/initial resistance × 100

Experimental Example 2: High-temperature Storage Performance Evaluation

The lithium secondary batteries of Examples 1 to 9 and Comparative Examples 1 to 3 were charged to 4.2 V/55 mA under 0.33 C/4.2 V constant current/constant voltage (CC/CV) conditions at room temperature and discharged at 0.33 C to 2.5 V to perform initial charge and discharge, and thereafter, the lithium secondary batteries were charged to 4.2 V/55 mA under 0.33 C/4.2 V constant current/constant voltage (CC/CV) conditions at room temperature and then stored at 60°C.

Experimental Example 2-1: Capacity Retention Evaluation

After the storage, the secondary batteries were charged to 4.2 V/55 mA under 0.33 C/4.2 V constant current/constant voltage (CC/CV) conditions at room temperature and discharged at 0.33 C to 2.5 V to measure capacity during the discharge.

Capacity retention (%) = (discharge capacity after 8 weeks of storage/initial discharge capacity) × 100

Experimental Example 2-2: Resistance Increase Rate Evaluation

During the initial charge and discharge, the secondary battery was charged to an SOC of 50 based on discharge capacity after checking capacity at room temperature, and discharged at a current of 2.5 C for 10 seconds to measure resistance using a difference in voltage drop in this case, the resistance was used as initial resistance, and, after 8 weeks of storage at 60°C, resistance was measured by the same method and used as final resistance to calculate a resistance increase rate using the following equation. The results thereof are presented in Table 2 below.

Resistance increase rate (%) = (final resistance - initial resistance)/(initial resistance} × 100

[Table 2]

| | Experimen tal Example 1-1 | Experimen tal Example 1-2 | Experimen tal Example 2-1 | Experimen tal Example 2-2 |
|---|---|---|---|---|
| | Capacity retention (%) | Resistance increase rate (%) | Capacity retention (%) | Resistance increase rate (%) |
| Example 1 | 93 | 8 | 94 | 10 |
| Example 2 | 94 | 7 | 91 | 11 |
| Example 3 | 95 | 7 | 91 | 9 |
| Example 4 | 98 | 6 | 95 | 8 |
| Example 5 | 96 | 9 | 90 | 10 |
| Example 6 | 92 | 8 | 93 | 9 |

(continued)

| | Experimen tal Example 1-1 | Experimen tal Example 1-2 | Experimen tal Example 2-1 | Experimen tal Example 2-2 |
|---|---|---|---|---|
| | Capacity retention (%) | Resistance increase rate (%) | Capacity retention (%) | Resistance increase rate (%) |
| Example 7 | 93 | 7 | 92 | 8 |
| Example 8 | 93 | 8 | 93 | 8 |
| Example 9 | 94 | 9 | 94 | 9 |
| Comparative Example 1 | 61 | 55 | 58 | 58 |
| Comparative Example 2 | 75 | 43 | 71 | 45 |
| Comparative Example 3 | 76 | 40 | 71 | 43 |
| Comparative Example 4 | 74 | 41 | 73 | 43 |

Referring to Table 2, it may be confirmed that the lithium secondary batteries according to Examples 1 to 9, which included the non-aqueous electrolyte including all of fluoroethylene carbonate, 1,2-difluoroethylene carbonate, and the compound represented by Formula 1 and the negative electrode containing the silicon-based active material, exhibited significantly better cycle charge and discharge performance and high-temperature storage performance than Comparative Examples 1 to 4.

Reference Examples

Reference Example 1

(Preparation of Non-aqueous Electrolyte)

A non-aqueous electrolyte was prepared in the same manner as in Comparative Example 1.

(Lithium Secondary Battery Preparation)

A positive electrode active material ($LiNi_{0.85}Co_{0.05}Mn_{0.07}Al_{0.03}O_2$) : a conductive agent (carbon nanotubes) : a binder (polyvinylidene fluoride) were added in a weight ratio of 97.74:0.70:1.56 to N-methyl-2-pyrrolidone (NMP), as a solvent, to prepare a positive electrode material mixture slurry (solid content 75.5 wt%). One surface of a 15 μm thick positive electrode current collector (Al thin film) was coated with the positive electrode material mixture slurry, dried, and then roll-pressed to prepare a positive electrode.

A negative electrode active material (mixture of artificial graphite and natural graphite in a weight ratio of 50.3:49.7) : a conductive agent (carbon black) : a binder (styrene-butadiene rubber) were added to distilled water, as a solvent, in a weight ratio of 96.7:1.0:2.3 to prepare a negative electrode material mixture slurry (solid content 50 wt%). One surface of an 8 μm thick negative electrode current collector (Cu thin film) was coated with the negative electrode material mixture slurry, dried, and then roll-pressed to prepare a negative electrode.

After a polyethylene porous film separator was disposed between the above-prepared positive electrode and negative electrode in a dry room, the above-prepared non-aqueous electrolyte was injected to prepare a secondary battery.

Reference Example 2

A lithium secondary battery was prepared in the same manner as in Reference Example 1 except that a non-aqueous electrolyte prepared in the same manner as in Example 4 was used.

Reference Example 3

A lithium secondary battery was prepared in the same manner as in Reference Example 1 except that a non-aqueous electrolyte prepared in the same manner as in Comparative Example 3 was used.

Reference Example 4

A lithium secondary battery was prepared in the same manner as in Reference Example 1 except that a non-aqueous electrolyte prepared in the same manner as in Comparative Example 4 was used.

Reference Experimental Example 1: High-temperature Cycle Charge and Discharge Performance Evaluation

An experiment was conducted using the same method as Experimental Example 1 (Experimental Examples 1-1 and 1-2). The results thereof are presented in Table 3 below.

Reference Experimental Example 2: High-temperature Storage Performance Evaluation

An experiment was conducted using the same method as Experimental Example 2 (Experimental Examples 2-1 and 2-2). The results thereof are presented in Table 3 below.

[Table 3]

| | Reference Experimental Example 1 | | Reference Experimental Example 2 | |
|---|---|---|---|---|
| | Capacity retention (%) | Resistance increase rate (%) | Capacity retention (%) | Resistance increase rate (%) |
| Reference Example 1 | 69 | 48 | 62 | 52 |
| Reference Example 2 | 63 | 52 | 58 | 55 |
| Reference Example 3 | 66 | 52 | 59 | 58 |
| Reference Example 4 | 65 | 51 | 59 | 53 |

Referring to Table 3, with respect to the lithium secondary batteries of Reference Examples 1 to 4 using only the carbon-based active material as the negative electrode active material, performance of Reference Example 2 (using the non-aqueous electrolyte used in Example 4) exhibited lower capacity retention and higher resistance increase rate during cycle charge and discharge and high-temperature storage than Reference Example 1 (using the non-aqueous electrolyte used in Comparative Example 1), Reference Example 3 (using the non-aqueous electrolyte used in Comparative Example 3), and Reference Example 4 (using the non-aqueous electrolyte used in Comparative Example 4). This is considered due to the fact that the combined use of fluoroethylene carbonate and 1,2-difluoroethylene carbonate caused unnecessary problems in the carbon-based active material, for example, it acted as resistance.

Thus, according to the experimental results of Table 3, it may be understood that the non-aqueous electrolyte of the present invention exhibited the desired life performance and high-temperature storage performance in the lithium secondary battery and the negative electrode containing the silicon-based active material.

## Claims

**1.** A lithium secondary battery comprising:

a positive electrode; a negative electrode; a separator disposed between the positive electrode and the negative electrode; and a non-aqueous electrolyte,
wherein the negative electrode comprises a negative electrode active material,
the negative electrode active material comprises a silicon-based active material, and
the non-aqueous electrolyte comprises a lithium salt, fluoroethylene carbonate, 1,2-difluoroethylene carbonate, and a compound represented by Formula 1:

[Formula 1]

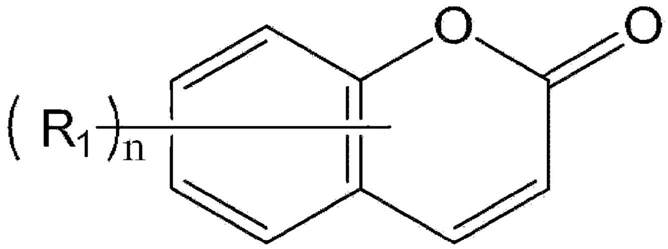

wherein, in Formula 1, $R_1$ comprises a halogen, a nitrile group, a propargyl group, an ester group, an ether group, a ketone group, a carboxyl group, an unsubstituted or substituted alkyl group, an unsubstituted or substituted alkenyl group, an unsubstituted or substituted alkynyl group, an unsubstituted or substituted alkoxy group, a boron group, a borate group, an isocyanate group, an isothiocyanate group, a silyl group, a siloxane group, a sulfone group, a sulfonate group, a sulfate group, or a combination of two or more thereof, and n is an integer of 0 to 6.

**2.** The lithium secondary battery of claim 1, wherein the silicon-based active material comprises a silicon-based particle,

wherein the silicon-based particle comprises a compound represented by Formula A:

[Formula A] $SiO_x$

wherein, in Formula A, $0 \leq x < 2$.

**3.** The lithium secondary battery of claim 2, wherein the silicon-based particle is formed of silicon (Si).

**4.** The lithium secondary battery of claim 1, wherein the compound represented by Formula 1 comprises at least one selected from the group consisting of a compound represented by Formula 1-A and a compound represented by Formula 1-B:

[Formula 1-A]

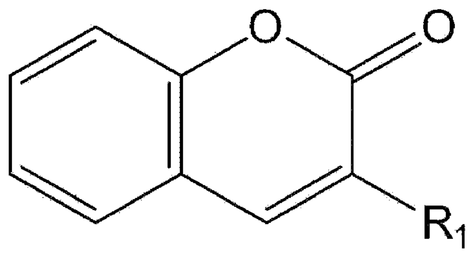

[Formula 1-B]

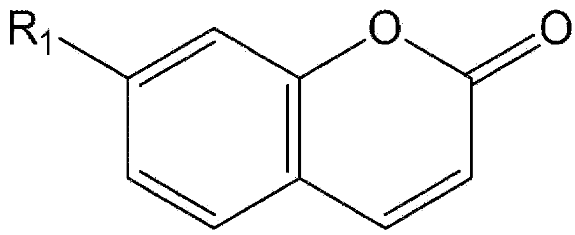

wherein, in Formulae 1-A and 1-B, $R_1$ is as defined in Formula 1.

**5.** The lithium secondary battery of claim 1, wherein the compound represented by Formula 1 comprises at least one selected from the group consisting of compounds represented by Formulae 1-1 to 1-9:

[Formula 1-1]

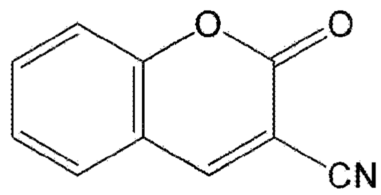

[Formula 1-2]

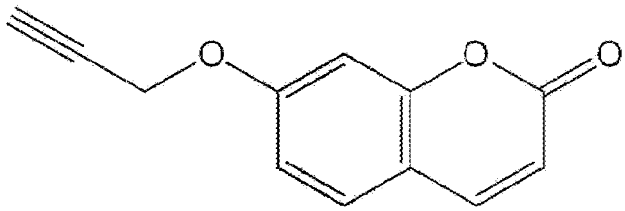

[Formula 1-3]

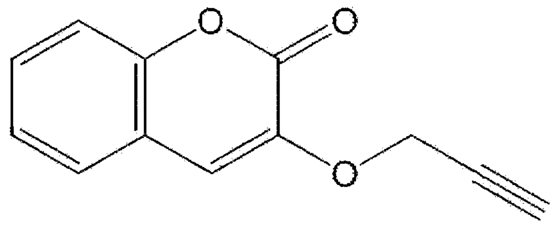

[Formula 1-4]

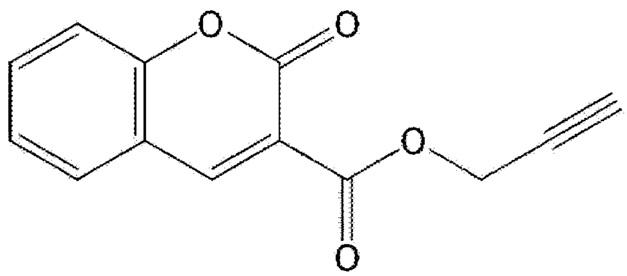

[Formula 1-5]

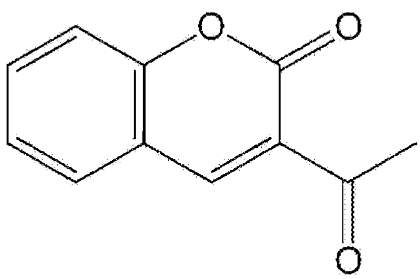

[Formula 1-6]

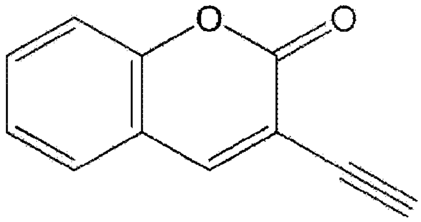

[Formula 1-7]

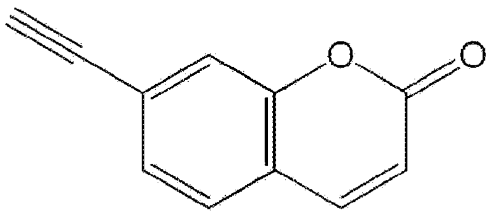

[Formula 1-8]

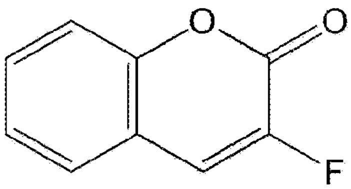

[Formula 1-9]

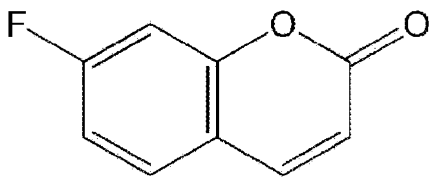

.

6. The lithium secondary battery of claim 1, wherein the fluoroethylene carbonate is included in the non-aqueous electrolyte in an amount of 3 vol% to 20 vol%.

7. The lithium secondary battery of claim 1, wherein the 1,2-difluoroethylene carbonate is included in the non-aqueous electrolyte in an amount of 10 vol% to 35 vol%.

8. The lithium secondary battery of claim 1, wherein the compound represented by Formula 1 is included in an amount of 0.1 wt% to 10 wt% based on a weight of the non-aqueous electrolyte.

9. The lithium secondary battery of claim 1, wherein a volume ratio of the fluoroethylene carbonate to the 1,2-difluoroethylene carbonate is in a range of 5:95 to 50:50.

10. The lithium secondary battery of claim 1, wherein a total amount of the fluoroethylene carbonate and the 1,2-difluoroethylene carbonate is greater than 10 wt% and less than or equal to 50 wt% based on a total weight of the non-aqueous electrolyte.

11. The lithium secondary battery of claim 1, wherein the lithium salt comprises at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$),

$LiCF_3SO_3$, LiFSI ($LiN(SO_2F)_2$), $LiCH_3SO_3$, $LiCF_3CO_2$, $LiCH_3CO_2$, and LiBETI ($LiN(SO_2CF_2CF_3)_2$).

**12.** The lithium secondary battery of claim 1, wherein a solid electrolyte interface film is formed on the negative electrode after formation of the lithium secondary battery,

the solid electrolyte interface film comprises an inorganic component, and
the inorganic component comprises LiF and $CO_3^{2-}$,
wherein a ratio of a weight of the LiF to a weight of the $CO_3^{2-}$ is 1.4 or more.

## INTERNATIONAL SEARCH REPORT

International application No.
**PCT/KR2024/014069**

**A. CLASSIFICATION OF SUBJECT MATTER**

**H01M 4/48**(2010.01)i; **H01M 4/38**(2006.01)i; **H01M 10/0567**(2010.01)i; **H01M 10/0525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/48(2010.01); H01M 10/052(2010.01); H01M 10/0525(2010.01); H01M 10/0566(2010.01); H01M 10/0567(2010.01); H01M 4/38(2006.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 비수 전해질(non-aqueous electrolyte), 첨가제(additive), 쿠마린(coumarin), 플루오로에틸렌 카보네이트(fluoroethylene carbonate), 디플루오로에틸렌 카보네이트(difluoroethylene carbonate), 고체전해질계면(SEI, solid electrolyte interphase), 리튬 이차전지(lithium secondary battery)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2009-0042735 A (SONY CORPORATION) 30 April 2009 (2009-04-30) See paragraphs <0041>, <0044>, <0187>, <0188>, <0191>, <0219>-<0222> and <0225>; and table 2, examples 2-7. | 1-12 |
| Y | KR 10-2560748 B1 (LG ENERGY SOLUTION, LTD.) 28 July 2023 (2023-07-28) See claims 1, 3 and 4; and paragraph [0122]. | 1-12 |
| A | KR 10-2023-0049022 A (LG ENERGY SOLUTION, LTD.) 12 April 2023 (2023-04-12) See claims 1-12. | 1-12 |
| A | CN 102569889 A (SHENZHEN CAPCHEM TECHNOLOGY CO., LTD.) 11 July 2012 (2012-07-11) See claims 1-9. | 1-12 |
| A | KR 10-2012-0031948 A (NEXEON LTD.) 04 April 2012 (2012-04-04) See entire document. | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 December 2024** | **19 December 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/014069**

| Patent document cited in search report | Publication date (day/month/year) | Patent family member(s) | Publication date (day/month/year) |
|---|---|---|---|
| KR 10-2009-0042735 A | 30 April 2009 | CN 101420025 A | 29 April 2009 |
| | | CN 101420025 B | 04 January 2012 |
| | | JP 2008-135382 A | 12 June 2008 |
| | | JP 5370630 B2 | 18 December 2013 |
| | | US 10312518 B2 | 04 June 2019 |
| | | US 2009-0111020 A1 | 30 April 2009 |
| KR 10-2560748 B1 | 28 July 2023 | CN 118715653 A | 27 September 2024 |
| | | EP 4456244 A1 | 30 October 2024 |
| | | KR 10-2023-0120114 A | 16 August 2023 |
| | | KR 10-2023-0120119 A | 16 August 2023 |
| | | KR 10-2593273 B1 | 25 October 2023 |
| | | US 2023-0253623 A1 | 10 August 2023 |
| | | US 2023-0253624 A1 | 10 August 2023 |
| | | WO 2023-153813 A1 | 17 August 2023 |
| KR 10-2023-0049022 A | 12 April 2023 | CA 3221221 A1 | 13 April 2023 |
| | | CN 117355972 A | 05 January 2024 |
| | | EP 4329040 A1 | 28 February 2024 |
| | | JP 2024-520516 A | 24 May 2024 |
| | | KR 10-2633506 B1 | 06 February 2024 |
| | | US 2023-0105288 A1 | 06 April 2023 |
| | | WO 2023-058922 A1 | 13 April 2023 |
| CN 102569889 A | 11 July 2012 | None | |
| KR 10-2012-0031948 A | 04 April 2012 | CA 2797208 A1 | 15 December 2011 |
| | | CN 102934264 A | 13 February 2013 |
| | | CN 102934264 B | 20 January 2016 |
| | | EP 2430686 A1 | 21 March 2012 |
| | | EP 2430686 B1 | 25 February 2015 |
| | | EP 2922119 A1 | 23 September 2015 |
| | | EP 2922119 B1 | 22 July 2020 |
| | | GB 2481124 A | 14 December 2011 |
| | | GB 2481124 B | 13 June 2012 |
| | | HK 1163365 A1 | 07 September 2012 |
| | | JP 2012-527740 A | 08 November 2012 |
| | | JP 2014-239055 A | 18 December 2014 |
| | | JP 5592947 B2 | 17 September 2014 |
| | | JP 6195812 B2 | 13 September 2017 |
| | | KR 10-1219375 B1 | 10 January 2013 |
| | | RU 2012122015 A | 10 December 2013 |
| | | RU 2533650 C2 | 20 November 2014 |
| | | TW 201208176 A | 16 February 2012 |
| | | TW I481093 B | 11 April 2015 |
| | | US 2013-0069601 A1 | 21 March 2013 |
| | | US 2015-0093653 A1 | 02 April 2015 |
| | | US 8945774 B2 | 03 February 2015 |
| | | US 9368836 B2 | 14 June 2016 |
| | | WO 2011-154692 A1 | 15 December 2011 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230126666
- KR 1020200005870